# EUROPEAN PATENT APPLICATION

(11) **EP 3 242 534 A1**
(43) Date of publication of application: **08.11.2017**
(21) Application number: 17169342.7
(22) Date of filing: 03.05.2017
(51) Int. Cl.: H05H 1/34, F03H 1/00, H05H 1/54, B64G 1/40

(54) **APPARATUS FOR GENERATING A PLASMA JET, IN PARTICULAR FOR SPACE PROPULSION**

(30) Priority: 04.05.2016 LU 93056
(71) Applicant: GRADEL, 5691 Ellange (LU)
(72) Inventor: PETKOW, Dejan, 66763 Dillingen (DE); ROUWETTE, Sander, 57480 Rettel (FR)
(74) Representative: Office Freylinger

(57) **Abstract**

An apparatus for generating a plasma jet comprises a gas containment vessel (12) having a cylindrical wall (14) extending along a central axis (A) and made from electrically conductive material, the gas containment vessel forming an outer electrode. and an internal electrode (20) arranged inside the gas containment vessel. The apparatus further comprises means for flowing at a controlled rate a gas into the gas containment vessel (12); and
a power source (24) to create a plasma between the electrodes.
Remarkably, the internal electrode (20) is a grid-like member and an outlet port (18) is arranged in the cylindrical wall (14) of the gas containment vessel. The apparatus is configured to allow the plasma formed within the vessel to emerge, through the outlet port (18), from the vessel as a plasma jet in a direction substantially perpendicular to central axis (A).

## Description

### FIELD OF THE INVENTION

The present invention generally relates to the field of plasma generation. More specifically, the invention concerns an apparatus for generating a plasma jet providing a thrust force to be used in an electric space propulsion device.

### BACKGROUND OF THE INVENTION

The efficiency of any space propulsion thruster is commonly expressed as specific impulse which is proportional to the plasma or ion jet exhaust velocity at the thruster exit. However, a high specific impulse implies a low thrust level and vice versa: chemical propulsion systems provide high thrust and are therefore used for lift-off. Correspondingly, their specific impulse is very low. Electric propulsion (EP) systems are significantly more efficient which is why practically all scientific mid- and long-term missions rely on EP systems. Nowadays more and more telecommunication satellites use EP systems for station keeping and increasingly quickly reaching the final orbit (Geostationary Orbit - GEO). All big satellite integrators are working on the development of so-called all-electric platforms for future telecommunication satellites which will also use EP systems for reaching the final orbit, not just for station keeping.

Another field of application refers to plasma sources applied to terrestrial applications. For example, plasma sources are used in vacuum based surface treatment processes, e.g. to coat surfaces by melting and accelerating tiny powder particles which form the coating upon impact.

The most prominent EP system is currently based on Hall Electric Thruster technology, followed by the Gridded Ion Engine technology. In both cases, Xenon ions are generated inside a discharge chamber and accelerated by electrostatic fields. Outside the thruster, the ion cloud is neutralized by the electrons which have been created in the ionization process. Those electrons are emitted using an emitter outside the thruster which points towards the thruster plume.

There are various other EP technologies, some of them have been flown before, others have never left the laboratory stage.

In recent years, an alternative plasma confinement principle called Inertial Electrostatic Confinement (IEC) got in the focus of the EP community. An IEC thruster uses a spherical configuration, wherein ions are generated and accelerated towards the center of a spherical vacuum chamber defined by a conductive vessel acting as anode. A wire grid cathode is arranged inside the vessel, concentrically. A virtual cathode forms in the high-density central core region, combined with a locally distorted cathode grid potential field, extracts accelerated ions into an intense quasi-neutral ion jet. A cylindrical guide is used as extraction guide to convey the plasma jet from the center of the vessel to an outlet port in the vessel.

However, the cylindrical extraction guide renders the system very complex and heavy. Moreover, plasma confinement quality requires accurately manufactured electrode grids. It is very difficult to manufacture complex spherical grids with a sufficient quality and geometric accuracy which are able to sustain both the mechanical loads during lift-off from ground (including shocks due to stage separation) and thermal loads during operation.

DE 10 2006 061435 discloses an apparatus for spraying a conductor track onto a substrate under mild conditions. The apparatus comprises a spray lance extending in a longitudinal direction and movable at a relative speed relative to the substrate. The spray lance includes a tubular cathode, cylindrical walls, a frontal exit opening and a feed connector. The spray lance is configured for ionizing an ionizable gas by an arc in order to generate a cold plasma having a plasma temperature of less than 3000 . The feed connector receives a powder with the aid of a carrier gas, the powder being carried along by the plasma during operation in the axial direction of the frontal exit opening, exiting there and impinging on the substrate.

DE 20 2013 007 063 U1 discloses a plasma producing device with a cathode forming, rod-shaped electrode centrally arranged inside a cylindrical plasma tube serving as anode. In use, the carrier gas with desired material is ignited as a low temperature plasma between the rod-shaped cathode and cylindrical anode. The formed plasma exits the device axially through a front exit opening.

US 5,485,721 relates to an arcjet-type propulsion device, wherein an electrical discharge is created in a flow of propellant. The device comprises a tubular housing, a collection chamber, a plenum chamber and nozzle neck (or constrictor) followed by an expansion section of the nozzle. The housing forms the anode and a rod-shaped cathode having a conical tip is arranged coaxially and concentrically in the housing, in line with the constrictor / nozzle. The propellant gas exits the device axially at one end, through the nozzle section.

### OBJECT OF THE INVENTION

The object of the present invention is to provide an alternative design of IEC-based apparatus for generating a plasma jet, which is easier to manufacture and more robust, in order to withstand the constraints for spacecraft applications.

This object is achieved by an apparatus for generating a plasma jet as claimed in claim 1.

### SUMMARY OF THE INVENTION

The present invention concerns a device that uses ions or neutrally charged gas to provide a thrust force or stream of matter. The invention has been particularly designed for spacecraft application and therefore concerns a device that can provide a propulsive thrust force for spacecraft propulsion, particularly a plasma jet thruster, which uses an inertial electrostatic confinement design having a discharge plasma for generating ions that provide thrust when accelerated and expelled from the device in the plasma jet. The invention also concerns a device that ejects matter with a jet form for use as an industrial plasma spray, industrial material processing, waste treatment, welding or cutting materials, or for plasma vapor deposition.

According to the invention, an apparatus for generating a plasma jet comprises:
a gas containment vessel having a cylindrical wall extending along a central axis and made from electrically conductive material, said gas containment vessel forming an outer electrode;
an internal electrode arranged inside said gas containment vessel, said internal electrode being a grid-like member made from electrically conductive material and preferably highly transparent to flowing ions and electrons;
means for flowing at a controlled rate a gas into said gas containment vessel;
a power source to create a sufficient difference of potential between said gas containment vessel and said internal electrode to create a plasma;
wherein said cylindrical wall of said gas containment vessel comprises an outlet port in said cylindrical wall and said apparatus is configured to allow said plasma formed within said vessel to emerge, through said outlet port, from the vessel as a plasma jet in a direction substantially perpendicular to said central axis.

A remarkable aspect of the present invention is thus the presence of an outlet port arranged in the cylindrical wall of the vessel, i.e. laterally and not axially, through which the plasma jet can emerge perpendicularly to the central axis of the vessel.

The internal electrode is advantageously formed as a cylindrical grid-like element having a longitudinal axis aligned with the central axis of said containment vessel. In operation, the internal electrode is typically operated as cathode, while the containment vessel forms the anode; the internal electrode is therefore also referred to as grid-like cathode. The cylindrical grid-like cathode has a shorter length than the containment vessel and is axially centered therein.

In an embodiment, the cylindrical grid-like cathode is formed by parallel wires or vanes, circularly arranged to define rectangular grid openings parallel to the central axis. The axial ends of the cylindrical grid-like cathode are closed. Preferably, the rectangular grid openings are of same dimension, except for one enlarged grid opening, which is aligned with the outlet port in the vessel wall.

This configuration thus permits the generation of a plasma jet that will escape from the cylindrical grid-like cathode through the larger opening and emerge from the vessel through the lateral outlet port, i.e. perpendicularly to the central axis of the vessel.

Also to be noted, since the larger opening in the cylindrical cathode grid is rectangular, it produces a substantially planar plasma jet. The outlet port in the cylindrical wall may then have a rectangular or oblong shape having a cross-section adapted to the plasma jet; but a circular outlet port of appropriate dimensions is also possible.

The present invention thus proposes an apparatus that, when used as propulsion device, allows for a drastic change of thrust vector orientation. Known solutions rely on devices designed to accelerate gas or plasma along the length axis. The instant invention accelerates plasma perpendicularly to the length axis, as further explained herein below.

It will be appreciated that such perpendicular thrust direction allows for minimum angular momentum generation, minimum extra mass, as well as minimum required volume when the vector gets rotated using an external mechanism. This also leads to an extreme degree of maneuverability, which can change future satellite design paradigms.

Another benefit arises in terms of linear geometrical scalability: doubling the power level by doubling the cathode and anode lengths and their openings leads to doubling the thrust without changing the internal plasma state.

Yet another advantage of the invention is the capacity of producing a planar plasma jet, i.e. a plasma jet with non-conical cross section. A planar plasma jet can significantly speed up surface coating processes as described in DE 10 2006 061435 or DE 20 2013 007 063 U1 due to the fact that such planar plasma jet can cover a much larger surface within the same amount of time. A planar plasma jet can also significantly improve the coating quality due to the fact that the plasma flow gradients inside the plasma jet volume are much lower in the length axis of such non-conical plasma jet.

In some embodiments, the apparatus comprises a powder feeding system for introducing powder material inside the gas containment vessel, whereby said powder material is carried by the plasma jet.

These and other embodiments of the invention are recited in the appended dependent claims.

### BRIEF DESCRIPTION OF THE DRAWINGS

The present invention will now be described, by way of example, with reference to the accompanying drawings, in which:
- Figure 1:: is a principle diagram of an embodiment of the present apparatus;
- Figure 2:: is a principle perspective view of the cathode grid;
- Figure 3:: is a detail, front view of the feed-through assembly;
- Figure 4:: is a principle cross-section view of the cathode grid.

### DETAILED DESCRIPTION OF PREFERRED EMBODIMENTS

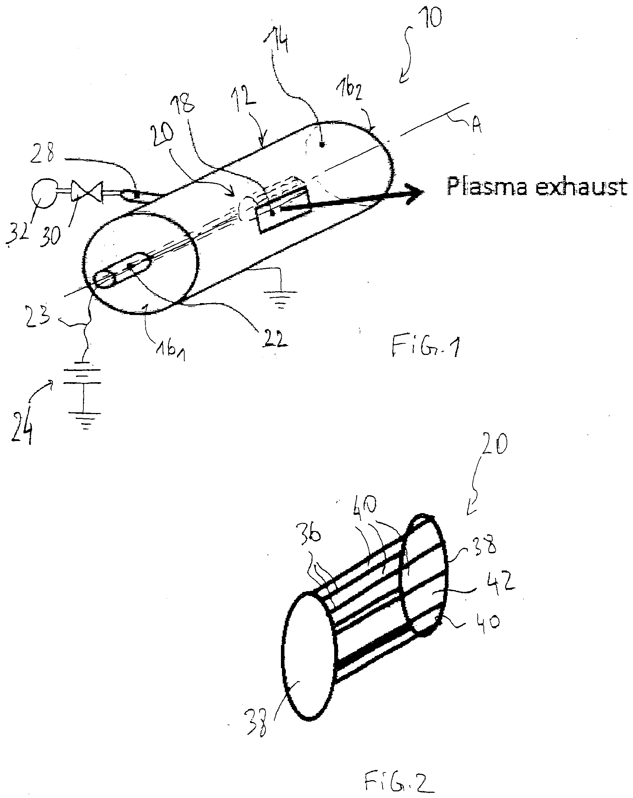

One embodiment of the present apparatus 10 for generating a plasma jet is shown in Fig.1, that is specifically designed for spacecraft applications - and may thus also be referred to as thruster or electric space propulsion device. The thruster 10 is an inertial electrostatic confinement device with cylindrical design. The thruster 10 comprises a housing formed by a cylindrical gas containment vessel 12. The vessel has a cylindrical wall 14 extending along a central or length axis A and is closed at both ends by end plates 16₁ and 16₂. The containment vessel 12 may be made from electrically conductive material, such as e.g. stainless steel or aluminum alloy.

Reference sign 18 designate a lateral outlet port in the vessel wall 14 through which, in use, a propulsive plasma jet emerges, as will be explained below. In this embodiment, the outlet port 18 is a rectangular orifice; however it could have other shapes, e.g. circular. Remarkably, through outlet port 18 the propulsive plasma jet can emerge in a direction transversal or perpendicular to the central axis A of the vessel.

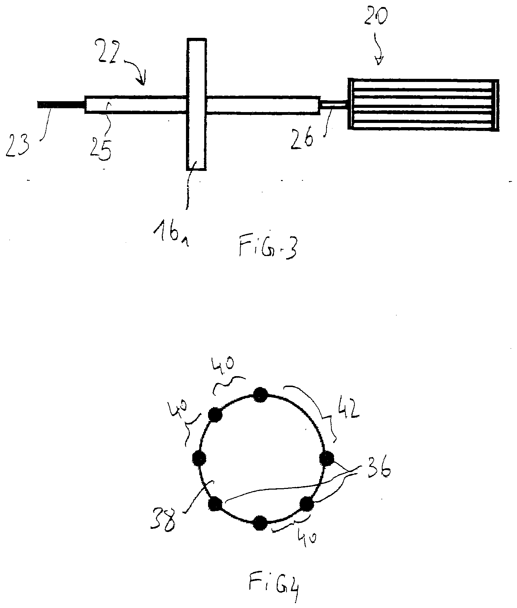

Located inside the containment vessel is a grid-like cathode designated 20. Reference sign 22 indicates a feedthrough that allows passing electrical power at a predetermined voltage from a power supply 24. In Fig.1, components and component parts located inside vessel 12 are represented in dashed lines. The feedthrough 22 may be composed of a small diameter tube 25 defining an internal passage for a conductive wire 23 connecting the power supply 24 to the internal electrode 20. The small diameter tube passes in a sealed and insulated manner through end plate 16₁. The internal electrode 20 comprises a support bracket or a threaded rod 26 engaging the inner end of the tube 25, as can be seen in Fig 3. The feedthrough 22 system also provides for insulation between the vessel and the internal electrode.

A gas or a gas mixture is introduced into the vessel 12 by means of a gas supply interface 28 comprising one or more small orifices provided in cylindrical wall 14. The gas supply interface is connected by piping to a gas source comprising flow control means, e.g. a valve 30, coupled to a pressurized gas cylinder 32 containing here propellant gas. This allows delivering a controlled flow rate of gas, in particular of propellant gas, into the containment vessel. The propellant gas may e.g. be Xenon or a noble gas. Other gases can also be used depending on the application.

It shall be appreciated that the inner electrode 20 is a cylindrical grid-like member configured to operate as cathode, thus also referred to as grid-like cathode. The cylindrical grid inner electrode 20 is a member formed by a plurality of wire or vanes 36 joined together to form a general cylinder shape with a pattern of openings or windows that provides a thin profile when viewed in a radial direction in order to achieve a high geometric transparency. "Effective transparency" is conventionally defined as a measure of the probability of ions passing through a grid in the case where the flowing ion beam profile is nonuniform.

The grid electrode 20 serves to define a central volume that allows radial flow of species, confines a plasma formed of generated ions and electrons, and provides a plasma flow stream that becomes the plasma jet.

The grid openings of the inner electrode 20 typically are all of same dimension, except for one opening having a larger dimension through which the plasma jet escapes due to distortion of the electric potential surface at this enlarged grid opening, as is known in the art. (in some application, one could use more than one enlarged grip opening). The cathode 20 may be made from a variety of metals having appropriate properties, in particular high temperature, high electron emissive material such as tungsten, tantalum or molybdenum.

An exemplary embodiment of the cylindrical inner electrode 20 is shown in Figures 2 and 4. The cylindrical electrode 20 is designed as a cylindrical cage: a set of parallel wires 36 extend between two disk-shaped end plates 38 (i.e. electrode 20 is closed in axial direction). The wires are circumferentially distributed at the periphery of the disks 38, in an equidistant manner, except for two neighboring wires that are separated by a slightly larger distance. Hence, the electrode has grid openings 40 that are all of same dimension, except for one enlarged grid opening designated 42.

The electrode inner 20 is arranged concentrically inside the vessel and axially centered. The inner electrode 20 is further oriented so that the larger opening 42 is radially aligned with outlet port 18. It may be further noted that outlet port is a rectangular orifice having its length oriented along central axis A. The length of electrode 20, i.e. the distance between end plates 38, is about the same length as that of outlet port 18. In general, their length may vary by up to +/-20 to 30%.

The present thruster 10 may be operated similarly to a convention spherical IEC device, as it will appear from the below description. In operation, the vessel 12 defines a containment enclosure having conductive walls held at ground potential and the cylindrical grid-like cathode 20, which is radially and axially centered (i.e. globally symmetrically aligned), acts as a cathode. The cathode 20 is connected to power source 24 to provide a high negative potential, while the vessel 12 itself is maintained at a ground potential. A propellant gas is introduced into the vessel. A voltage is applied to the cathode electrode 20 and, once the voltage difference between the electrodes is high enough, a glow discharge is induced, leading to a generation of electrons and ions. All charges are accelerated by radial electric fields. The electrons created in the interelectrode space move towards the anode where they get absorbed while the ions created between the electrodes move towards the center of the device. On their way to the center some of them collide with the cathode, thereby getting either neutralized at the surface, or implanted. Some of them trigger the emission of secondary electrons. Other processes that can happen are ion bombardment induced erosion. The dominance of certain processes depends on the ion type, energy of impact, angle of impact, and cathode material. Other processes of relevance are ion induced ionization of background neutrals, and energy losses due to charge exchange with background neutrals. The latter is a significant loss term as it translates a fast ion into a slow ion. The former process happens preferably inside the cathode area where a slow ion and a slow electron are produced. The slow ions in the plasma core preferably get lost to the cathode (where they neutralize) while the slow electrons preferably get rejected by the cathode's potential until they escape into the inter-electrode space by passing between the cathode vanes. Former research confirms that the effective grid transparency, i.e. the quantity which expresses the probability of an ion to avoid collision with the cathode, can be greatly enhanced under certain operational conditions, thereby reaching values up to 95-99%. A high grid transparency is equivalent to a high cathode life time, both can be further increased by e.g. even more grids with well-defined potentials.

As is known with IEC devices, the enlarged grid opening will create a very intense, tightly coupled space-charge neutralized plasma jet, that is directed outward from the central core plasma region. The jet formation is the result of a large distortion of the electric potential surface at the enlarged grid opening. The resulting local potential gradient initiates electron flow which triggers ions to follow them out across the surface. The result is the formation of an intense space charge neutralized beam at that location. Since grid opening 42 is radially aligned with outlet port 18, the plasma jet will exit therethough and provide a thrust in a direction perpendicular to the central axis A, i.e. perpendicular to the length axis of the cylindrical containment vessel 12.

The present invention brings a number of benefits.

Compared to the state of the art thruster technologies, the cylindrical configuration allows linear scaling by increasing the length of the electrodes without changing the plasma state. Doubling the electrode lengths doubles the power consumption by doubling the current whereas voltage and plasma state remain the same.

The use of cylindrical geometry is also of advantage in terms of manufacturing technologies. Cylindrical shapes can be produced with good quality and geometric accuracy, improving robustness and rendering the device more prone to sustain both the mechanical loads during lift-off from and thermal loads during operation.

Compared to the state of the art non-IEC thruster technology the grid transparency is very high, reaching even 95-99% depending on proper operational and configurational conditions.

Combined with an EPPM (Electric Propulsion Pointing Mechanism, ESA terminology) allows a significantly larger change of thrust direction by rotating the device around its length axis A compared to the state of the art thruster technology. The strongly reduced angular momentum that is generated and to be conserved if operated in combination with an EPPM is another strong benefit compared to the art. The lower the angular momentum that is to be conserved (using the satellite's control mechanisms), the lower the system wide impact of the change of thrust vector.

## Claims

1. An apparatus for generating a plasma jet comprising:
a gas containment vessel (12) having a cylindrical wall (14) extending along a central axis (A) and made from electrically conductive material, said gas containment vessel forming an outer electrode;
an internal electrode (20) arranged inside said gas containment vessel, said internal electrode being a grid-like cathode made from electrically conductive material and preferably highly transparent to flowing ions and electrons;
means for flowing at a controlled rate a gas into said gas containment vessel (12);
a power source (24) to create a sufficient difference of potential between said gas containment vessel (12) and said internal electrode (20) to create a plasma;
wherein an outlet port (18) is arranged in said cylindrical wall (14) of said gas containment vessel and said apparatus is configured to allow said plasma formed within said vessel (12) to emerge, through said outlet port (18), from the vessel as a plasma jet, preferably in a direction substantially perpendicular to said central axis (A).

2. The apparatus according to claim 1, wherein said grid-like cathode is formed as a cylindrical grid-like cathode having a longitudinal axis aligned with said central axis (A) of said containment vessel.

3. The apparatus according claim 2, wherein said cylindrical grid-like cathode has a shorter length than said containment vessel and is axially centered therein.

4. The apparatus according to claim 2 or 3, wherein said cylindrical grid-like cathode is formed by parallel wires or vanes, circularly arranged to define rectangular grid openings parallel to said central axis.

5. The apparatus according to claim 4, wherein said rectangular grid openings (40) are of same dimension, except for one enlarged grid opening (42) which is aligned with said outlet port (18) in said vessel wall (14).

6. The apparatus according to any one of claims 2 to 5, wherein said cylindrical grid-like cathode (20) has its axial ends closed.

7. The apparatus according to any one of claims 2 to 6, wherein said cylindrical grid-like cathode is configured so that a substantially planar plasma jet emerges therefrom.

8. The apparatus according to any one of the preceding claims, comprising a feed-through insulator system, which is configured to provide electrical power at a predetermined voltage from said power source to said internal electrode at a value sufficient to create a plasma discharge, preferably a high negative voltage to operate said internal electrode as cathode.

9. The apparatus according to claim 8, wherein said feed-through insulator system is further configured to provide insulation between said gas containment vessel and said internal electrode.

10. The apparatus according to any one of the preceding claims, wherein the vessel (12) comprises cooling vanes which carry the gas to predetermined entry points in the discharge chamber.

11. The apparatus according to any one of the preceding claims, comprising a mechanical pointing mechanism configured for selectively rotating the vessel (12) around its central axis (A).

12. An electric space propulsion device comprising an apparatus for generating a plasma jet as claimed in any one of claims 1 to 11, wherein said gas is a propellant gas in order to form a propulsive plasma jet, in particular having a power density and thrust.

13. An ion or particle jet source comprising an apparatus for generating a plasma jet as claimed in any one of claims 1 to 11.

14. The source according to claim 13, further comprising a powder feeding system for introducing powder material inside said gas containment vessel, whereby said powder material is carried by the jet.
